# EUROPEAN PATENT APPLICATION

(11) **EP 3 696 752 A1**
(43) Date of publication of application: **19.08.2020**
(21) Application number: 19156896.3
(22) Date of filing: 13.02.2019
(51) Int. Cl.: G06Q 10/08

(54) **TAMPER EVIDENT RFID BASED SYSTEM AND METHOD**

(71) Applicant: Validicity Sweden AB, 181 30 Lidingö (SE)
(72) Inventor: LYGONIS, Donnie SC, 113 61 Stockholm (SE); JONSSON, Alex, 185 41 VAXHOLM (SE); SAHLSTRÖM, Staffan, 114 43 STOCKHOLM (SE); MOVIN, Staffan, 181 30 LIDINGÖ (SE); HÄSSLER, Lars, 111 45 STOCKHOLM (SE); SANDVIK, Daniel, 168 67 BROMMA (SE)
(74) Representative: Reyier, Ann-Mari

(57) **Abstract**

A sample collection, storage and testing system (100), wherein the system (100) comprises a cap closure device (11) for sealing a respective first and second security bottle (10, 10) in a tampering evident manner by seal assurance means (13) provided in such a manner that non-destructive tampering of the cap closure device (11) of the security bottles (10) is impossible in that a seal assurance means (13) of the cap closure device (11) is arranged to be inserted into the security bottle (10) and attached at the cap closure device (11) and arranged to indicate a status (S) of the cap closure device (11), wherein the system (100) is configured to generate and communicate digital information (I) related to the security bottles (10) including the status (S) of the closure (11), wherein the system (100) further comprises a data collection layer (150), an API layer (160) for communication with a distributed entry ledger, (170) configured to record all changes ever performed of the system (100) in time series sequential order, wherein the system (100) is configured to inject tampering evident data (171) onto the distributed entry ledger (170), wherein the seal assurance means (13) is configured to indicate tampering of the closure device (11) of which the seal assurance means (13) is provided, communicate digital information related to the security bottle (10), the status (S) of the cap closure device (11) to the distributed entry ledger (170) and being arranged to manipulate the communicated information such that any change ever performed related to the status (S) of the seal assurance means (13) by injecting tampering evident data (171) onto the distributed entry ledger (170).

## Description

### FIELD OF THE INVENTION

The present invention relates to a system and method for providing an indication of whether a substance sample has been tampered with or otherwise accessed. More particularly, the present invention relates to a tamper evident system and method for efficiently protecting biological and chemical substance samples against tampering or otherwise accessed while being collected, transported and stored.

### BACKGROUND OF THE INVENTION

Securely and efficiently collecting, transporting and storing substance samples against tampering remains a critical concern. The vast majority of the existing samples are collected, transported and stored insecurely in a manner prone to tampering often in substance sample containers having only a closure such as a flip top, screw top, etc. that typically can easily be breached by unauthorized personnel. In addition, mechanisms must be put in place to monitor and notify of tampering or unauthorized access to such substance samples. Substance samples must be secured in a manner appropriate to guard against misuse, theft, loss or accidental tampering. These security measures must be implemented in a coordinated manner that balances security and efficiency with access to authorized personnel for the legitimate use of substance samples.

Sample collection, transportation and storing equipment such as biological and chemical substance sample containers are commonly used in the medical, chemical, and bioscience research, as well as in testing industries. One typical use is doping control of athletes.

In doping control, sample collection equipment, typically sample containers, which typically includes so-called "A and B security bottles", are purchased by Anti-Doping Organizations (ADOs) - i.e. International Federations, National and Regional Anti-Doping Organizations and Major Event Organizers - to collect, transport and store substance samples such as urine and blood samples for athletes' doping controls.

When an athlete is selected for doping control, typically they provide a urine and/or blood sample to be collected. The sample is collected and divided into two samples denoted an A respectively a B sample, typically into so-called respective A and B security bottles; and, both bottles A and B are securely sealed by the athlete and then checked by a Doping Control Officer before being transported to a WADA-accredited laboratory for analysis and further storage. Generally, the B sample is frozen and analyzed only if the A sample was found positive to contain a prohibited substance. Typically when a sample has been found to contain a prohibited substance, athletes have the opportunity to be present at the re-analysis of the B sample.

January 2018, WADA was informed that security bottles also of the new generation may potentially be susceptible to tampering such as manual opening 'upon freezing' of a sample.

The World Anti-Doping Agency (WADA) has initiated an investigation into a potential integrity issue with a new generation of security bottles and will recommend appropriate measures, if needed, in order to maintain the integrity of the doping control process.

There have also been taken measures to visually check security bottles for tampering. However, according to our knowledge until now no tamper evident security bottle closures have been presented.

### SUMMARY

According to a first aspect of the present invention, there is provided a cap closure device for a particular security bottle, the security bottle having particular container windings adapted to the receive the particular closure device. The cap closure device is embodied to seal the security bottle, typically by means of a user pushing or pushing and turning the closure device onto windings of the security bottle to seal the container. The seal is tampering evident, having seal assurance means that is arranged to be inserted into the container and comprising an electronic indicator and that can i. e. can indicate tampering electronically and possibly a visual visually to assure that the seal has not been tempered with.

Directly to the outer container windings there is an electronic indicator typically a radio frequency indicator device (RFID) such as a radio frequency indicator device and/or near field communication device (NFC). The electronic indicator is adapted to be manipulated, typically destroyed at least partly indicating tampering, typically opening of the seal and can then not be read by means of an indicator device reader thereby indicating tampering with the seal. The status of the indicator, i, e. being tampered with or not, ID of the bottle as well of the operator are stored in a distributed double entry ledger. The operator, has his/her own encryption/decryption means, typically keys to store and sign information of the distributed entry ledger

According to an embodiment, there is provided a sample collection, storage and testing system. The system comprises a respective cap closure device for sealing a respective first and second security bottle in a tampering evident manner by seal assurance means provided in such a manner that non-destructive tampering of the closure devices of the security bottles is impossible in that a seal assurance means provided at the closure element is arranged to that is arranged to be inserted into the container and arranged to indicate a status of the cap closure device. The system is configured to generate and communicate digital information related to the security bottles including the status of the cap closure. This provided at least by means of an electronic indicator. The system further comprises a data collection layer, an API layer for communication with a distributed entry ledger, configured to record all changes ever performed of the system in time series sequential order. The system is configured to inject tampering evident data onto the block chain, wherein the seal assurance means is configured to indicate tampering of the closure device onto which the seal assurance means is provided, communicate digital information related to the status of the closure to the double entry ledger and being arranged to manipulate the communicated information such that any change ever performed related to the status of the closure by injecting tampering evident data onto the distributed entry ledger.

Typically, the seal assurance means comprises an electronic indicator configured to indicate tampering of the seal, typically the cap closure device and to communicate tampering evident data to the distributed entry ledger by means of injecting tampering evident data onto a distributed entry ledger or some other means such as non-electronic means such as Quick Response code means (QR code means) that also provides a chain of custody.

Typically, the electronic indicator comprises a radio frequency indicator device such as an RFID tag configured to indicate tampering of the closure device onto which the indicator is provided and further configured to transmit and inject tampering evident data onto the distributed entry ledger.

Typically, the electronic indicator comprises an RFID tag and near field communication circuitry (NFC).
The electronic indicator can also be combined with a visual indicator adapted to visually indicate tampering of the seal, typically the closure device and/or to visually indicate tampering of the security bottle itself.

According to a second aspect of the present invention, there is provided a method of a sample collection, storage and testing system, wherein the system comprises a cap closure device for sealing a respective first and second security bottle in a tampering evident manner by seal assurance means provided in such a manner that non-destructive tampering of the cap closure device of the security bottles is impossible in that a seal assurance means is arranged to be inserted into the security bottle and attached at the cap closure device to indicate a status of the cap closure device, the system injecting tampering evident data onto the block chain, wherein the seal assurance mean is indicating tampering of the cap closure device of which the seal assurance mean is provided, communicating digital information related to the status of the closure to the distributed entry ledger and manipulating the communicated information such that any change ever performed related to the status of the closure by injecting tampering evident data onto the distributed entry ledger.

According to the first aspect and embodiment and a second aspect of the present invention, there is provided a secure system and method for collecting, transporting storing and controlling samples stored in security bottles. The system is considered secure in the regard that the storage and control is tampering evident. In at least some embodiments, the present invention provides a tamper evident tracking and accountability system and method for security bottles having samples stored. The security is typically based on RFID, Near field communication (NFC), Block-chain & Cloud storage technology) and a tampering evident closure device having seal assurance means arranged to evidently indicate tampering of the sample stored

The present invention according to various aspect and embodiments provides a chain of custody of the anti-doping process in that the sample and the security bottles can be supervised all the way from collecting, transporting and storing the sample to testing the sample, typically in a laboratory. In particular, the doping-process can be controlled such that the sample cannot be tempered with without clear evidence that tampering has occurred.

The present invention according to an aspect is giving solutions to problems that the anti-doping industry have had problem to address in particular as regards tampering with the security bottles. It will also give the anti-doping institutions better evidence in civil courts.

### BRIEF DESCRIPTION OF DRAWINGS

Aspects of the disclosure can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views, and in which:
FIG. 1 illustrates an example of a security bottle and a cap closure device including an electronic indicator, to be used in a system of sample collection, storage and testing in accordance with an embodiment of the present invention;
FIG. 1A illustrates in a side-view a view from an outside of an example of a security bottle and a cap closure device including a seal assurance means, having an electronic indicator, to be used in a system of sample collection, storage and testing in accordance with an embodiment of the present invention;
FIG. 1B illustrates in cross-sectional view an example of a security bottle and a cap closure device to be used in a system of sample collection storage and testing in accordance with an embodiment of the present invention;
FIG. 2A illustrates an example of an electronic seal assurance means comprising an essentially rectangular RFID tag and near field communication (NFC) circuitry; seal assurance means comprising an essentially circular RFID tag and near field communication (NFC) circuitry;
FIG. 2B illustrates another example of a of an electronic seal assurance means comprising an essentially rectangular RFID tag and near field communication (NFC) circuitry; seal assurance means comprising an essentially circular RFID tag and near field communication (NFC) circuitry;
FIG. 3 illustrates a schematic view of a method and system in accordance with an embodiment of the present invention, and
FIG. 4 illustrates a schematic view of a user interface of the method and system in FIG. 3 in accordance with an embodiment of the present invention.

### DESCRIPTION OF EMBODIMENTS

While the present invention is susceptible of embodiments in various forms, there is shown in the drawings and will hereinafter be described some exemplary and non-limiting embodiments, with the understanding that the present disclosure is to be considered an exemplification of the invention and is not intended to limit the invention to the specific embodiments illustrated.

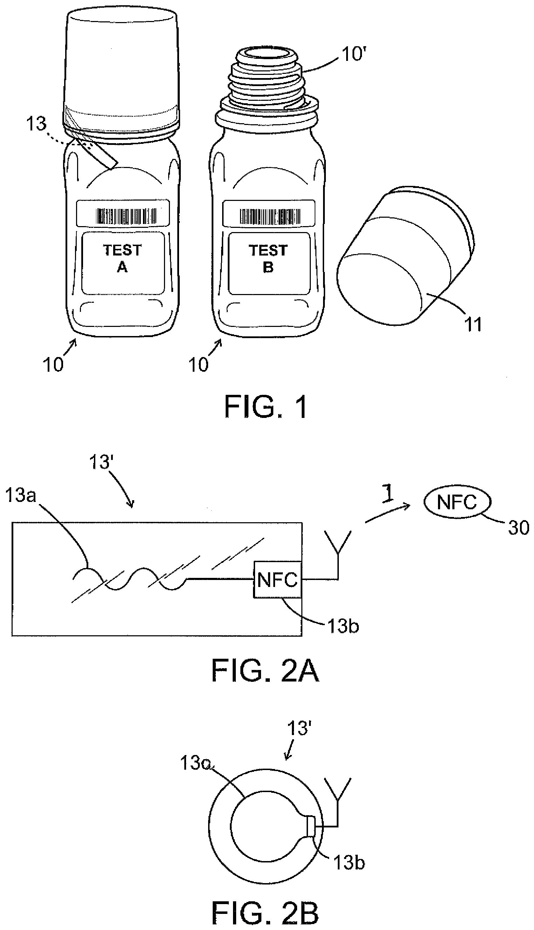

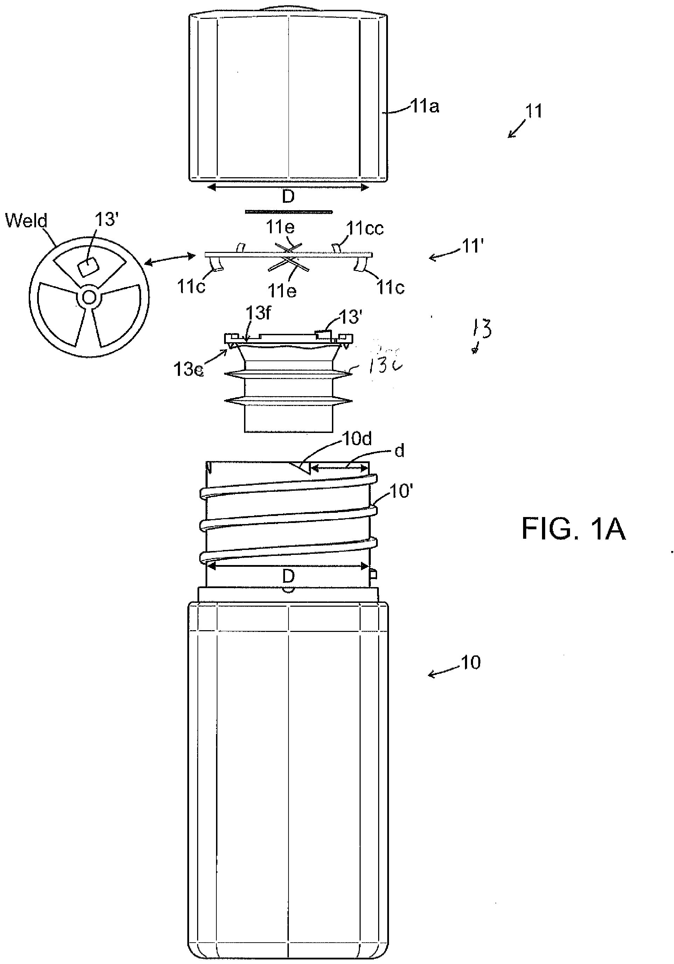

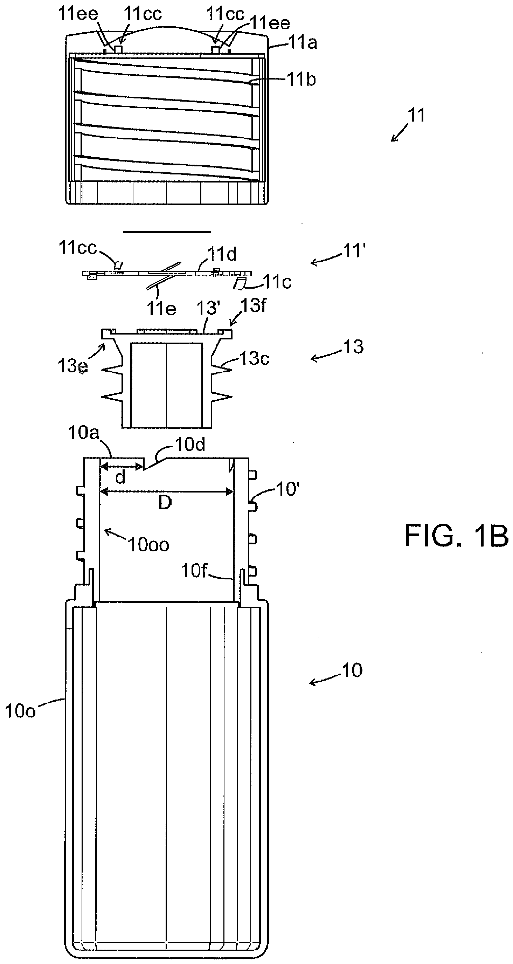

Now is referred to FIG. 1 which, in a perspective view from an out-side, illustrates an example of a security bottle 10, herein and in the following referred to as a "security bottle" 10 and an embodiment of a closure device, herein a cap closure device, 11 to be used in a system in accordance with an embodiment of the present invention. Based on this disclosure, it should be understood that cap closure device 11 and security bottle 10 can be a variety of combinations that are used for storing samples, not limited to security bottles only but also to other types of sample storage containers.

When an athlete is selected for doping control, typically they provide a urine and/or blood sample to be collected. The sample is collected and divided into two samples denoted an A and a B sample, respectively, into security bottles 10, typically into so-called "A and B security bottles"; and, both security bottles 10, 10 are securely sealed typically by the athlete and then checked by a Doping Control Officer before being transported to a WADA-accredited laboratory for analysis and further storage.

Security collection equipment, which includes A and B security bottles, are purchased by Anti-Doping Organizations (ADOs) - i.e. International Federations, National and Regional Anti-Doping Organizations and Major Event Organizers - to collect, transport and store urine and blood samples for athletes' doping controls.

It is up to each ADO to decide which sample collection equipment they use provided they meet the requirements of Article 6.3.4 of the International Standard for Testing and Investigations (ISTI).

The Sample Collection Authority shall only use Sample Collection Equipment systems which, at a minimum:
- Have a unique numbering system incorporated into all bottles, containers, tubes or other items used to seal the sample;
- Ensure the identity of the athlete is not evident from the equipment itself;
- Ensure that all equipment is clean and sealed prior to use by the athlete, and
- Have a sample container sealing system that is tampering-evident;

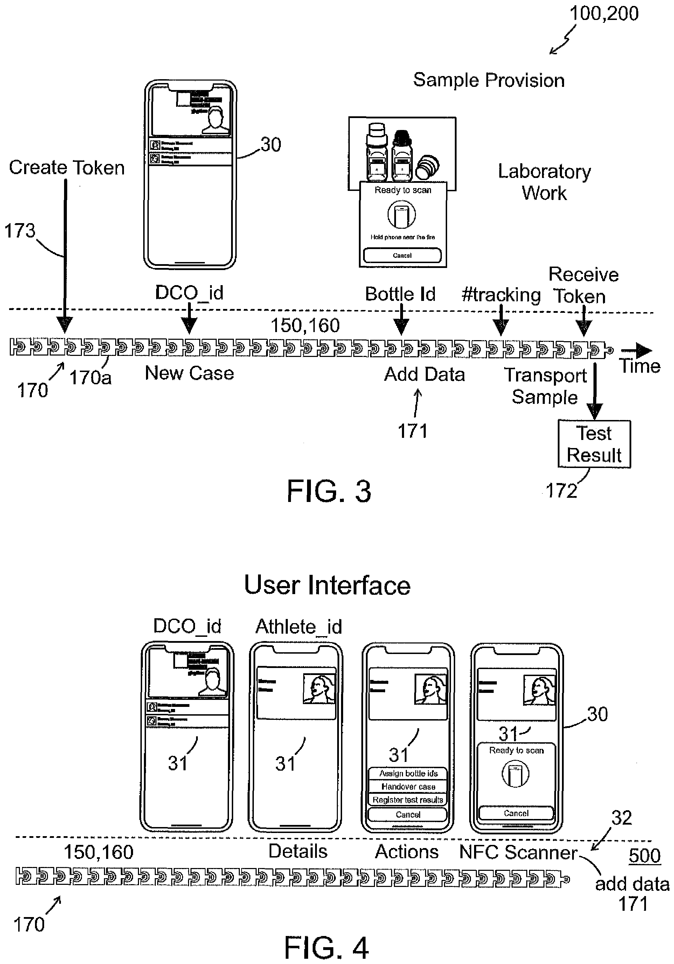

The cap closure device 11 is embodied to seal the particular security bottle 10 typically by means of a user turning the cap closure device 11 onto the particular security bottle's 10 outer windings 10' until the cap closure device 11 is turned into a bottom and is in a locked position typically snap fits onto the security bottle 10. Typically, a snapping sound is provided and when the snapping sound is heard the cap closure device cannot be released by hand-force without destroying visually mechanical locking means (not shown in this FIG. 1). Typically, as also illustrated in FIG. 1 there are two security bottles, 10 ("Test A") and 10 ("Test B"), respectively, of which one 10 is sealed ("Test A") and one is open ("Test B"). The different security bottles 10 "Test A" and "Test B" typically contain one and the same sample. How these bottles 10 "Test A" and "Test B" are used will be further described and illustrated in more detail and with reference to FIGS. 3-4.

Now is referred to FIG. 1A and FIG. 1B.

FIG. 1A illustrates in a side-view view from an outside an example of a security bottle 10 and a cap closure device 11 including a seal assurance means, having an electronic indicator device, to be used in a system sample collection, storage and testing in accordance with an embodiment of the present invention. Only one of the security bottles 10 "Test A" and "Test B" illustrated in FIG. 1 is illustrated in this FIG. 1A as well as in FIG. 1B because of simplicity.

FIG. 1B illustrates in cross-sectional view an example of a security bottle and a cap closure device to be used in a system sample collection, typically the same as illustrated and described by reference to FIG. 1A.

The cap closure device 11 is sized and designed to fit over the top of the sample container 10 and can be turned and/or pushed and turned to fasten into a closed position on the container 10. A seal assurance means 13 typically comprising a screw bottle plug 13e FIG. 1B and having at least an electronic indicator 13', is adapted to plug an opening 10a (having a diameter D, FIG. 1B) of the bottle 10. The seal assurance means 13 further comprise a cap closure locking washer 11' adapted to hold and lock the bottle plug 13e (FIG. 1B) onto the bottle 10.

The, particular outer windings 10' or other similar kinds of fastening means are provided on the particular security bottle 10 such that the cap closure device 11 having to the cap closure device's 11 corresponding particular inner windings 11b can be winded or pushed and winded into the locked position easily by means of hand-force and once into the locked position, the cap closure device 11 is adapted to remain locked in the locked position, typically provided by snap fit locking means which will be described below, even if the cap closure device 11 is turned in an unwinding direction typically by some-one authorized unlocking or unauthorized trying to unlock the cap closure device 11. The windings 10', 11b are embodied such that they "fit closely" to each other 10', 11b. The term "fit closely" together to each other means that introducing any kind of tampering object between the corresponding windings to in some way unlock and/or release the cap closure device 11 from the sample container is not possible or at least troublesome enough for a person to access the sample in the sample container 10. Therefore, an essentially in a closed position S_{closed} non-accessible security bottle 10 with a cap closure device 11 having lower locking means 10d, 11c and upper locking means 11cc, is provided. Herein, a first part of the lower locking means 10d for instance a recess adapted to receive a corresponding second part of the lower locking means. The recess 10d is adapted to receive a corresponding protruding lower locking part 11c of a locking washer 11' having a lower downwards protruding lower locking means 11c and upper locking means 11cc. The recess 10d is located at a distance d being essentially central on a cross-sectional diameter D of the sample container 10. The distance d is typically 30-60 % of the diameter D. the distance c is typically selected to prevent tampering by trying to unlock the cap closure mechanically from an outside 10o of the container 10. A resilient means 11e such as a spring is provided onto the washer 11c and adapted to push the washer 11' against on opening 10o of the sample container 10. There are typically at least two lower locking means 11c and recesses 10d, and typically situated on opposite sides, of which only one side is shown in FIG. 1A and FIG. 1B, of the security bottle 10 but without any limitation to this particular number. In a corresponding way, the two upper locking means 11cc are provided to snap fit into corresponding recesses 11ee of the cap closure device 11. The locking washer 11' is typically made of thin sheet metal, for instance below 0.5 mm in thickness.

The seal assurance means 13, is provided in such a manner that a non-destructive tampering of the closure device 11 is impossible in that the seal assurance means 13 is typically provided at the cap closure device 11 is arranged to indicate a status S (bottle 10 being tampered with not) of the cap closure device after being closed and sealing the security bottle 10 (having a sample stored therein and sealed by means of the cap closure device 11 being in the closed position, status S_{closed}.

The cap closure device 11 is preferably made of a mechanically resistant material, e.g., polypropylene, resin, or a similar substantially rigid polymer. Typically the cap closure device 11 is made of a mechanically resistant material resistant enough to resist being broken by hand force before one or more of the lower 11c and/or upper locking means 11cc break(s). Typically, the material of the cap closure device 11 should also provide a clear visual indication of tampering in the event of being broken, stretched, cut, torn, burned, and the like. In this way also a mechanical indication of tampering with the security bottle 10 is provided. This adds security as regards tampering.

The seal assurance means 13 is typically sized and designed to comprise the screw plug 13e, an electronic indicator 13', and the locking washer 11' and the lower 11c and upper 11cc locking means.

The screw plug 13e per se comprises one or more circumferentially protruding sealing tongues 13c, typically embodied as O-rings in grooves, and other seals 13c (FIG. 1A, FIG. 1B) also typically embodied as O-rings in grooves that is/are adapted to plug the opening 10o and seal against an inside 10f of the security bottle 10 at least in an opening part 10oo thereof. The sealing tongues 13c can be made of a flexible material such as TPE (Thermo Plastic Elastomer) or the like. A further seal such as an O-ring can also be provided at a top end 13c (FIG. 1A only) of the screw plug 13e to seal against the opening 10a of the bottle 10.

An tampering evident electronic indicator 13', e.g., RFID/NFC chip, integrated circuit, transceiver, or similar technology that is capable of transmitting status S data related to the status S_{closed} (security bottle 10 tampered with or not) of the" seal assurance means 13, at least when queried, and optionally receiving and storing data is also provided, typically embedded onto a top surface 13f of the screw plug 13e. Herein, the term "embedded" means that the electronic indicator 13' is "embedded physically" and hence protected to surroundings from tampering with. Typically the embedded electronic indicator 13' is glued to the top surface 13f of the screw plug 13e and welded (See inset in FIG 1A) at the cap closure device 11. A hologram (not shown in this figure) may also be provided on the electronic indicator 13' to further increase safety. Typically, the embedded tampering evident electronic indicator 13' is mounted onto top surface of the screw plug 13e and through going holes (See inset in FIG. 1A) in the locking washer 11' adapted to provide an indication of tampering, because of its inoperability following tampering. Since the electronic indicator 13' of the seal assurance means 13 is broken due to tampering, the electronic indicator 13'typically having the embedded RFID chip cannot be read due to tampering.

Now is referred to FIG. 2A which illustrates an example of seal assurance means 13' herein an electronic indicator comprising an embedded readable RFID tag including an antenna 13a and near field communication (NFC) circuitry 13b.

In embodiments wherein the tampering evident indicator 13' is an RFID tag, the RFID tag 13' includes an integrated circuit (IC) and near field communication circuitry (NFC) 13b including an antenna 13a (antenna schematically 13a as shown only). The IC of the tampering evident indicator 13'b processes, optionally stores, information, modulates and demodulates radio frequency (RF) signals, and optionally performs other specialized or programmable functions. The antenna 13a receives and transmits RF signals. The RFID tag 13' may be passive, active or battery assisted passive (BAP). A battery is included in active and BAP embodiments. The RFID 13' tag may be designed so that the antenna 13ba, chip, battery, and/or wiring typically the antenna 13a inside the RFID tag break when the RFID tag is tampered with, may thereby provide an indication of tampering, because of its inoperability.
The tampering evident electronic indicator 13' is adapted to transmit, and optionally store, a variety of information related to the sample to an associated data reader (not explicitly shown in FIG. 1A or FIG. 1B, but in FIG 2A or FIG. 2B , e.g., an RFID reader or transceiver. The embedded tampering evident indicator 13' may thus be designed to provide an electronic indication of tampering upon the opening of the sealed security bottle 10. Damage or removal of the cap closure device 11 will result in a traceable and/or noticeable alteration of the "smart" seal assurance means 13 of the cap closure device 11. Once locked, the seal assurance means 13 ensures that the security bottle remains closed and cannot be opened without presenting a clear physical electronic indication of tampering of the security bottle.

The seal assurance means 13' according to various embodiments can include more than one embedded transceiver 13b, that can comprise or communicate with an NFC capable device, which is capable of receiving and transmitting data. The embedded transceiver 13b may be programmed to transmit data according to a schedule or upon being queried or instructed by an associated computer in an external NFC-capable reader device also capable of communicating with cloud services that authenticate protected containers based on the NFC tag's 13' ID such as a smart phone (not shown) to initiate interrogation and receive reporting signals from the associated embedded transceiver. The embedded transceiver may communicate with an associated computer on a variety of known wireless and/or wired communication platforms e.g., NFC capable, as appropriate.

One particularly convenient implementation - due to a wide availability of NFC-capable smartphones 30 (See FIGS. 3-4) combines NFC (13.56MHz High Frequency [HF] RFID) tags with the NFC-capable smartphones 30. In this implementation, NFC tags 13' are placed in such a way that tampering with the seal assurance means 13 destroys the one or more NFC tag 13', generally by breaking the antenna 13a in some way for example twisting and breaking the antenna 13a in the act of opening the electronic indicator 13'. This means that services such as a distributed double entry ledger that authenticate protected containers 10 based on the NFC tag's 13' ID cannot be used after the protected container 10 has been opened and the seal assurance means 13 been manipulated.

Now is referred to FIG. 3 which illustrates a schematic view of a system 100 and method in accordance with an embodiment of the present invention. The system 100 and method employs a sampling process wherein distributed ledger technology 170 such as "block chain" is employed. The distributed ledger technology 170 can be double entry ledger but may alternatively be single entry ledger, triple entry ledger or the like. For instance it is not necessary that two IDs are broken, but it might be sufficient that only one ID is broken.

During recent years, in decentralized systems, a distributed ledger technology typically, simply and generically referred to as "block chain" has been invented.

Herein, the term"distributed ledgers", also known as "shared ledgers", "replicated ledgers" or, in specific implementations, "block chains", are a type of database architecture where a single record of data is spread throughout and viewable by numerous entities, and typically updated according to a robust consensus protocol/algorithm, each entry dependent of the previous backwards until the very first entry.

Herein, this context, the term "block chain" includes all kinds of technology related to block chain. The block chain 170 in this context can be described as a distributed data store that maintains a continuously growing list of data records called "blocks" 170a. Each block 170a typically contains a time stamp and a link to a previous block. Every such block 170a has a complete or partial copy of the block chain 170. The system 100 further comprises a data collection layer 150, an API layer 160 for communication with the distributed double entry ledger 170. This is schematically shown in FIG. 3.

Despite the use of the term 'injecting', "or configured to inject" are often simply coded scripts (often with state) that execute and perform processes or transactions on a distributed ledger.

Programmable clauses may interact/integrate with IoT platforms, internet-connected (or other network connected) devices (e.g., IoT devices) APIs.

The system and method 100, 200 is configured to inject tampering evident data 171 onto the block chain 170, wherein the seal assurance means 13 is configured to indicate tampering of the cap closure device 11 onto which the seal assurance means 13 is provided, communicate digital information related to the security bottle 10, the status (S) of the cap closure device 11 to the double entry ledger 170 and being arranged to manipulate the communicated information such that any change ever performed related to the status S of the seal assurance means 13 by injecting tampering evident data 171 onto the distributed entry ledger 170a.

In a first step (new case) a token 173 is created, The Status S of the seal assurance means 13', such as status S of electronic indicator 13'RFID ID of Doping Control Officer (DCO id of a new case is entered (New case) 150, 160 , sample is provided by the DCO, an ID of the bottle Bottle Id is entered (typically scanned) Both the ID of the bottle and the DCO is stored in a block chain, wherein the DCO has personal keys to sign packets to be entered to the block.

The present invention in an embodiment utilizes an RFID transceiver and system which can actively or passively query on-demand or as programmed to report all or part of the data associated with the RFID tag's 13'ID of the security bottles 10.

The above disclosed modules and layers will not be further described in more detail, since they and their implementation are well known to the skilled person. The communication is schematically illustrated by arrows in FIG. 3. The distributed system 100 may also comprise crypto modules for generating public and private key pairs as well as has functions on public key to produce customer identifier. The distributed system 100 may also comprise a sample record module for registration and recording of a sample for a security bottle 10 (FIG. 1A or FIG. 1B). A communication module may also be provided and configured to communicate with customers via email or sms, or the like. A gate way module may provide functionality of connecting to external services via standard network protocols. None of these are further described in this context since these are well-known to the skilled person to implement.

The distributed system 100 is accessible but not limited to via Web browsers using HTTP/HTTPS protocol and mobile applications running on mobile operating systems like Android, IOS, and Windows or programmatically using standard APIs. An example is NFC-capable smartphones 30.

FIG. 3 illustrates a method of maintaining, tracking and identifying the integrity of a substance sample in accordance with the present invention. The method 100 begins at 150 by writing information related to the sample to an RFID device 13 'that is uniquely associated with the individual sample, i.e., a data device that is attached to the security bottle. The information may include, for example, the date, a unique identification of the security bottle (vial), text, research data, etc. At 10, placing and locking the substance sample in the substance security bottle having the RFID device attached thereto. At 171, writing any updated information to the RFID device. This updated information may include, for example, the date, time, sample lot size, etc., Storing the security bottle 10 in an appropriate environment to maintain the integrity of the substance sample. At 171, sending the substance security bottle 10 to a laboratory for analysis. At 171, inventorying the substance security bottle by interrogating (test result) the RFID 13' associated with the substance security bottle.

One particularly useful application of this method is in situations where a chain of custody is desired.

The exemplary embodiments described above may be combined in a variety of ways with each other. Furthermore, the steps and number of the various steps illustrated in the figures may be adjusted from that shown. It should be noted that the present invention may, however, be embodied in many different forms and should not be construed as limited to the embodiments set forth herein; rather, the embodiments set forth herein are provided so that the disclosure will be thorough and complete, and will fully convey the scope of the invention to those skilled in the art. The accompanying drawings illustrate exemplary embodiments of the invention.

The wireless communication device 30 may be or comprise a near field and/or radio frequency communication device, and may comprise the transmitter, the receiver, or both. When the wireless communication device comprises the transmitter, the transmitter may comprise a modulator. When the wireless communication device 30 comprises the receiver, the receiver may comprise a demodulator.

In various further or alternative embodiments, forming the integrated circuit may comprise printing one or more layers of the integrated circuit. For example, the method may comprise printing a plurality of the layers of the integrated circuit. Alternatively or additionally, forming the integrated circuit may comprise forming a plurality of layers of the integrated circuit by one or more thin film processing techniques. In some examples, forming the integrated circuit may comprise forming one or more layers of the integrated circuit by one or more thin film processing techniques, and printing one or more additional layers of the integrated circuit.

In some examples, the memory further includes a plurality of bits configured to store a unique identification code for the container or package. For example, the memory may be formed by printing at least one layer of the memory that includes the plurality of bits configured to store the unique identification code for the container or package.

In various embodiments, the integrated circuit may comprise one or more printed layers and/or a plurality of thin films. In one example, the antenna consists of single metal layer, and the integrated circuit may be placed over the antenna in a manner that electrically connects at least two ends of the antenna 13a to the integrated circuit. As for other aspects of the present invention, in some embodiments, the integrated circuit further comprises a threshold comparator receiving an output of the continuity sensor(s). Additionally or alternatively, the integrated circuit may further comprise a memory including one or more bits configured to store a value corresponding to the continuity state of the container or package and/or a plurality of bits configured to store a unique identification code for the container or package. The memory may comprise at least one printed layer configured to store the unique identification code for the container or package.

As a result, the present invention may expand the use and functionality of near field communication and RF tags and devices. The novel tags and devices enable detection of an opened or compromised packaged or sealed product, along with continued use of the tags and devices to communicate information about the product in the container or package after the container or package has been opened.

The present invention may use a combination of ROM bits (typically as a unique ID) and one or more sensor bits, and contemplates sensing a state of an electrical connection made or broken by the chemical sensor as a state of the container and/or a form of "barcode". When read by an NFC-capable smart phone 30 or other reading device, the NFC and/or RFID tag's memory bit(s) allocated to sensor data will indicate whether the package is intact or broken.

The present NFC/RF tag indicator 13'may include one or more additional and/or redundant electronic indicator 13'. The redundant indicators(s) can be used in an "AND"-type function with (e.g., the IC and sensors sense that the container is opened only when all of the sensors change state), or in an "OR"-type function with the sensor(s) (e.g., the IC and sensors sense that the container is opened when any of the sensors and redundant sensors change state). Alternatively, the sensor(s) and redundant sensors can provide one or more "partially-opened" states when one or more of the sensors and redundant sensors change state and one or more of the sensors and redundant sensors do not change state. One skilled in the art can easily derive logic and applications for such functionality and/or capability.

Implementations, where the antenna 13a is permanently broken, and the tag 13'is therefore unreadable, after a container has been opened. In this implementation, the NFC data will indicate to the reader (smartphone, USB reader, etc.) not only the unique ID number of that NFC and/or RFID tag 13 '(which can be used for everything from mobile marketing, customer loyalty, and discounts/cross-sell offers to supply chain tracking, tax tracking for governments, and providing specific product manufacturing information such as lot no., manufacturing date, etc.), but also whether the protected product is factory sealed / unopened (and therefore contains genuine product) or has been opened or compromised (and therefore contents are suspect if delivered to the consumer in that state).

Applications that read NFC and/or RFID tags are generally connected to cloud servers that collect information about the IDs that are read. This is to log data for analysis and to serve the correct experience and/or provide accurate information to the consumer's smartphone or other NFC- and/or RF-capable device. When the ID indicating an Opened' state is first read and processed by the cloud system, it will automatically trigger alerts (and potentially trigger investigation).

The NFC label 13'can be combined with tamper evident adhesives and paper for an extra layer of security. In this way, the consumer, retailer, distributor or brand representative will have a visual indication of whether the label has been tampered with.

The antenna can be printed (e.g., using printed conductors such as, but not limited to, silver from a silver paste or ink) or manufactured using conventional methods like etched aluminum (e.g., by sputtering or evaporating aluminum on a substrate such as a plastic film or sheet, patterning in low-resolution. The antenna 13a can be sized and shaped to match any of multiple form factors, while preserving compatibility with the 13.56 MHz target frequency of the NFC reader hardware.

The invention can be applied broadly to all RFID tags 13'.

The antenna 13a is configured to receive and/or transmit or broadcast a wireless signal. In various embodiments, the wireless communication device comprises a near field or radio frequency communication device. In one example, the device is an NFC device, such as an NFC tag.

As described herein, the tag generally comprises an integrated circuit and a continuity sensor. Consequently, electrically connecting the continuity sensor(s) to the integrated circuit (IC) comprises electrically connecting the continuity sensor(s) to a set of terminals on or in the IC. Furthermore, the integrated circuit may further comprise a threshold comparator configured to receive an output of the sensor, a memory including one or more bits configured to store a value corresponding to a continuity state of the container or package, and/or any of the other circuits or circuit blocks disclosed herein. For example, the memory may include a plurality of bits configured to store a unique identification code for the container or package. In such a case, forming the memory may comprise printing at least one layer of the memory that includes the plurality of bits configured to store the unique identification code (e.g., to form a hardwired ROM, similar to a mask ROM).

By integrating the NFC, RF and/or RFID function(s) onto the tag 13', any NFC or RF signal- based reader or device (e.g., an NFC-enabled smart / cellular phone or tablet computer) can be used to send sensor results to anyone. By using such an NFC- or RF-enabled device 30, a wireless intemet data management system (without the need for an additional sensor reader) is possible. In addition, an on-board ROM 338 can be printed (in part or in its entirety) and/or placed in or on the IC to provide a unique ID, eliminating possible human transcription and/or sample ID errors, as well as providing an anti-counterfeit ID.

In various embodiments, the tag is a near field and/or radio frequency communication device, such as an NFC tag, and comprises an antenna, one or more continuity sensors, and an integrated circuit electrically connected to each of the antenna and a continuity sensor(s). When the continuity sensor(s) determine that the package or container is unopened, the wireless tag reader displays a first set of information, and when the continuity sensor(s) determine that the package or container is opened, the wireless tag reader displays a second set of information different from the first set of information. In either case (i.e., when the continuity sensor[s] determine that the package or container is opened or unopened), the wireless tag reader may display additional information (i.e., in addition to first or second set of information) that can be the same, regardless of whether the package or container is determined to be opened or unopened.

Referring to FIG. 4, the NFC- or RF-enabled mobile device 30 reads the wireless communication device 30 and, among other information , displays results of the sensor processing operations. Optionally, the mobile device 30 can display 31 information about the product inside the container or packaging to which the device 30 is attached or affixed for the user of the mobile device 30 to review. Such information may include the product identity, amount (e.g., volume or weight), price, expiration date, lot number, manufacturer, etc. The mobile device 30 can also communicate over the network with the a home network, a retailer, a medical or other service provider (e.g., a pharmacy), and/or the product manufacturer to obtain additional information (details, Actions, NFC scanner) 32, such as product usage advice, health care information and/or messages, information from a database (which can be, in one example, a single accessible database), etc. The mobile device 30 can also enable the user to provide product feedback to the retailer, service provider and/or manufacturer, as well as provide information to the database, over the communications network 500 such as the Internet

The communications network can also be connected to the Internet, thus providing worldwide access. In another aspect of the invention, the wireless tag reader 30 can incorporate geolocation data along with continuity sensor data and unique ID data to the communications network.

The tags 13' for use in the network 500 combine NFC and/or RFID functionality with. The tag 13' includes one or more antennas (not shown in FIG. 4) for communication with the wireless sensor reader 30 one or more optional additional sensors, an RF and/or near field sensor HFC

According to aspects of the communication network 500, the wireless tag reader 30 includes one or more antennas, a user interface, a display, a network communications module, and a RFID or near field communications reader. The network communications module is configured to provide communication with the communications network. The wireless tag reader is implemented in a wireless device, such as a smart phone, tablet computer, wireless communications device in an automobile or other vehicle, or laptop computer.

The present invention enables large scale deployment over a large geographic area of multiple sensors using the existing mobile phone communications network and the Internet to collect and cross-validate identification and/or security data, while at the same time providing real time product and geolocation information.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application. It is intended that the scope of the invention be defined by the claims appended hereto and their equivalents.

## Claims

1. A sample collection, storage and testing system (100), wherein the system (100) comprises a cap closure device (11) for sealing a respective first and second security bottle (10, 10) in a tampering evident manner by seal assurance means (13) provided in such a manner that non-destructive tampering of the cap closure device (11) of the security bottles (10) is impossible in that a seal assurance means (13) of the cap closure device (11) is arranged to be inserted into the security bottle (10) and attached at the cap closure device (11) and arranged to indicate a status (S) of the cap closure device (11), wherein the system (100) is configured to generate and communicate digital information (I) related to the security bottles (10) including the status (S) of the closure (11), wherein the system (100) further comprises a data collection layer (150), an API layer (160) for communication with a distributed entry ledger, (170) configured to record all changes ever performed of the system (100) in time series sequential order, **characterized in that** the system (100) is configured to inject tampering evident data (171) onto the distributed entry ledger (170), wherein the seal assurance means (13) is configured to indicate tampering of the closure device (11) of which the seal assurance means (13) is provided, communicate digital information related to the security bottle (10), the status (S) of the cap closure device (11) to the distributed entry ledger (170) and being arranged to manipulate the communicated information such that any change ever performed related to the status (S) of the seal assurance means (13) by injecting tampering evident data (171) onto the distributed entry ledger (170).

2. The system according to claim 1, wherein the seal assurance means (13) comprises an electronic indicator (13') configured to indicate tampering of the cap closure device (11) and to communicate tampering evident data (171) to the distributed entry ledger (170) by means of inject tampering evident data (171) onto the distributed entry ledger (170).

3. The system according to claim 2, wherein the electronic indicator (13') comprises a radio frequency indicator tag device such as an RFID tag configured to indicate tampering of the cap closure device (11) onto which the seal assurance means (13) is provided and further configured to transmit and inject tampering evident data (171) onto the distributed entry ledger (170).

4. The system according to claim 3, wherein the electronic indicator (13') comprises an RFID tag and near field communication circuitry, NFC, (13b).

5. The system according to claim 3, wherein the seal assurance means (13) comprises a screw plug (13e).

6. The system according to claim 3, wherein the electronic indicator (13') is embedded.

7. The system according to claim 6, wherein the electronic indicator (13') is glued.

8. The system according to claim 3, wherein the electronic indicator (13') has a hologram provided thereon.

9. The system according to any one of the claims 1-8, wherein the distributed entry ledger, (170) is configured to record information (I) such as id:s (idA, idB) of the security bottles (10A, B), id of an operator (idOP) and the status (S) of the seal assurance means (13), wherein the operator has keys to sign data packets injected into the block.

10. The system according to any one of the claims 1-8, wherein the distributed entry ledger (170) is a verified third party block chain.

11. The system according to any one of the claims 1-10, further comprising a block chain interface (172) configured to query block chain (170) records (171).

12. A method (200) of a sample collection, storage and testing system (100), wherein the system (100) comprises a cap closure device (11) for sealing a respective first and second security bottle (10,) in a tampering evident manner by seal assurance means (13) provided in such a manner that non-destructive tampering of the cap closure device (11) of the security bottles (10) is impossible in that a seal assurance means (13) is arranged to be inserted into the security (10) and attached at the cap closure device (11) to indicate a status (S) of the cap closure (11), **characterized in** the step of the system (100, 200) injecting tampering evident data (171) onto the block chain (170), wherein the seal assurance means (13) is indicating tampering of the cap closure device (11) of which the seal assurance means (13) is provided, communicating digital information related to the status (S) of the closure to the distributed entry ledger (170) and manipulating the communicated information such that any change ever performed related to the status of the closure (10) by injecting tampering evident data (171) onto the distributed entry ledger (170).

13. The method according to claim 12, further the electronic indicator (13') indicating tampering of the closure (10) and communicating tampering evident data (171) to the distributed double ledger (170) by means of injecting tampering evident data (171) onto the distributed entry ledger (170).

14. The method according to claim 13, wherein the distributed entry ledger, (170) is configured to record information (I) such as id:s (idA, idB)of the security bottles (A, B), id of an operator (idOP) and the status (S) of the seal assurance means (13), wherein the operator has keys to sign data packets injected into the block.

15. The method according to claim 14, further comprising the step of a block chain interface (172) querying block chain (170) records (171).
